# EUROPÄISCHE PATENTSCHRIFT

(11) **EP 2 381 135 B1**
(45) Veröffentlichungstag und Bekanntmachung des Hinweises auf die Patenterteilung: **30.05.2012**
(21) Anmeldenummer: 11174960.2
(22) Anmeldetag: 15.08.2008
(51) Int. Cl.: F16H 47/04, F16H 3/093, F16H 37/08

(54) **Leistungsverzweigungsgetriebe**
Hydromechanical power split drive
Transmission hydromécanique à division de puissance

(30) Priorität: 02.10.2007 DE 102007047194; 16.07.2008 DE 102008040443
(43) Veröffentlichungstag der Anmeldung: 26.10.2011
(62) Teilanmeldung aus: 08803052.3
(73) Patentinhaber: ZF Friedrichshafen AG, 88038 Friedrichshafen (DE)
(72) Erfinder: Legner, Jürgen, 88048 Friedrichshafen (DE)

(56) Entgegenhaltungen:
- DE-B- 1 064 311
- US-A- 4 121 479

## Beschreibung

Die Erfindung betrifft ein Leistungsverzweigungsgetriebe nach der im Oberbegriff von Anspruch 1 näher definierten Art, und wie in US 4 121 479 gezeigt.

Gattungsgemäße Leistungsverzweigungsgetriebe weisen einen stufenlos verstellbaren Leistungszweig und einen mechanischen Leistungszweig auf, welche in einem Summierungsgetriebe summiert werden.

Die DE 10 2006 004 223 A1 offenbart ein Leistungsverzweigungsgetriebe mit einem stufenlos verstellbaren Leistungszweig und einem mechanischen Leistungszweig, welche in einem Summierungsgetriebe summiert werden, wobei das Summierungsgetriebe aus einem Planetengetriebe mit einem Doppelplanetenrad, zwei Sonnenrädern und einem Hohlrad besteht.

Bei Arbeitsmaschinen, wie beispielsweise Radlader, ist der Antriebsmotor oberhalb der Antriebsachsen angeordnet, wodurch ein Getriebe benötigt wird, welches einen großen Achsabstand zwischen dem Antrieb des Getriebes und dem Abtrieb des Getriebes aufweisen muß. Zusätzlich ist bei Arbeitsmaschinen der Bauraum für die Breite und Tiefe des Getriebes äußerst beschränkt, so dass für Arbeitsmaschinen häufig schmale, kurze Getriebe mit großen Achsabständen verwendet werden.

Der vorliegenden Erfindung liegt die Aufgabe zugrunde, ein Leistungsverzweigungsgetriebe zu schaffen, welches kompakt bauend ist und einen großen Achsabstand ermöglicht.

Zusätzlich soll das Leistungsverzweigungsgetriebe einen hohen Schaltkomfort beim Wechsel von einem ersten Fahrbereich in einen zweiten Fahrbereich aufweisen.

Die Aufgabe wird mit einem, auch die kennzeichnenden Merkmale des Hauptanspruchs aufweisenden, gattungsgemäßen Leistungsverzweigungsgetriebe gelöst.

Erfindungsgemäß weist das Leistungsverzweigungsgetriebe einen stufenlos verstellbaren Leistungszweig und einen mechanischen Leistungszweig auf.
Der stufenlos verstellbare Leistungszweig kann als hydrostatischer Leistungszweig ausgebildet sein, welcher stufenlos verstellbare Hydrostateinheiten in Schrägscheibenbauart oder in Schrägachsenbauart aufweisen kann. Diese hydrostatischen Einheiten können so zusammengeschaltet sein, dass sie über ein gemeinsames Joch verstellbar sind. Dieses Joch kann so eingestellt sein, dass in einer ersten Stellung die erste Hydrostateinheit auf Hubvolumen Null steht und die zweite Hydrostateinheit ihr maximales Hubvolumen aufweist. In der zweiten Endstellung des Jochs ist die erste Hydrostateinheit auf maximales Hubvolumen und die zweite Hydrostateinheit auf Hubvolumen Null verstellt.

Es besteht jedoch auch die Möglichkeit, die stufenlosen Einheiten als elektrische Einheiten auszubilden.
Der stufenlos verstellbare Leistungszweig und der mechanische Leistungszweig werden in einem Summierungsgetriebe aufsummiert, wobei das Summierungsgetriebe als Planetengetriebe ausgebildet ist und mindestens ein Doppelplanetenrad aufweist, welches mit einem Hohlrad und zwei Sonnenrädern kämmt.
Das Leistungsverzweigungsgetriebe weist Wellen auf, auf welchen Kupplungen angeordnet sind, mittels welcher einerseits eine Vorwärtsfahrtrichtung und eine Rückwärtsfahrtrichtung schaltbar sind und andererseits mindestens zwei Fahrbereiche schaltbar sind, innerhalb welcher die Drehzahl des Abtriebs stufenlos veränderbar ist. Die Wellen sind beabstandet zueinander angeordnet und auf jeder Welle ist nur eine einzige Kupplung angeordnet, wodurch ein großer Achsabstand und ein ansonsten kompakt bauendes Getriebe geschaffen wird. Dem Summierungsgetriebe ist eine Kupplung für eine Vorwärtsfahrtrichtung und eine Kupplung für eine Rückwärtsfahrtrichtung über Zahnräder vorgeschaltet angeordnet, wodurch dem Summierungsgetriebe nachgeschaltet die Kupplungen für die Fahrbereiche angeordnet werden können.

Vorzugsweise ist die Kupplung für die Vorwärtsfahrtrichtung koaxial zum Antrieb des Leistungsverzweigungsgetriebes und die Kupplung für Rückwärtsfahrt auf einer Welle beabstandet zur Kupplung für Vorwärtsfahrt angeordnet. Die Übersetzungen der Zahnräder sind vorzugsweise so ausgelegt, dass die Welle, welche mit der Kupplung für Rückwärtsfahrt verbunden ist, eine höhere Drehzahl aufweist als die Antriebswelle, welche mit der Kupplung für Vorwärtsfahrt verbunden ist. Dadurch ist es möglich, auf der Welle mit der Kupplung für Rückwärtsfahrt einen oder mehrere Verbraucher, wie beispielsweise eine hydraulische Pumpe, anzuordnen, welche schon bei niedrigeren Drehzahlen am Antrieb des Getriebes eine ausreichend hohe Drehzahl aufweist. Diese hydraulische Pumpe kann beispielsweise für die hydraulische Versorgung des Getriebesystems sowie für Kühlung und Schmierung verwendet werden. Eine weitere hydraulische Pumpe kann für die Versorgung der Arbeitshydraulik verwendet werden.
Der Planetenträger des Summierungsgetriebes, welcher das mindestens eine Doppelplanetenrad lagert, ist über Zahnräder und die Kupplung für Vorwärtsfahrt und die Kupplung für Rückwärtsfahrt mit dem Antrieb des Leistungsverzweigungsgetriebes verbindbar. Ein erstes Sonnenrad des Summierungsgetriebes ist mit der ersten, stufenlos verstellbaren Einheit verbunden und das Hohlrad des Summierungsgetriebes steht über Zahnräder mit der zweiten, stufenlos verstellbaren Einheit in Wirkverbindung. Um einen ersten Fahrbereich zu schalten, wird die zweite, stufenlos verstellbare Einheit über eine Kupplung für einen ersten Fahrbereich und weitere Zahnräder mit dem Abtrieb des Leistungsverzweigungsgetriebes verbunden. Die Zahnräder des Leistungsverzweigungsgetriebes sind, bis auf das Summierungsplanetengetriebe, als Stirnräder ausgebildet.

Um einen zweiten Fahrbereich zu schalten, wird die Kupplung für den ersten Fahrbereich im Öffnungssinne und die Kupplung für den zweiten Fahrbereich im Schließsinne betätigt, wodurch das zweite Sonnenrad des Summierungsplanetengetriebes mit dem Abtrieb des Leistungsverzweigungsgetriebes in Wirkverbindung bringbar ist.

Vorzugsweise sind die Übersetzungen der Bereichsgetriebe so gewählt, dass am Ende des ersten Fahrbereichs, bei welchem die Kupplung für den ersten Fahrbereich noch geschlossen ist, die Kupplung für den zweiten Fahrbereich keine Differenzdrehzahl aufweist und somit synchron geschlossen werden kann. Während des Bereichswechsels wird die Kupplung für den ersten Fahrbereich im Öffnungssinne und die Kupplung für den zweiten Fahrbereich im Schließsinne betätigt, wobei während dieser Schaltung die stufenlos verstellbaren Einheiten, beispielsweise die Hydrostateinheiten, nur wenig in ihrer Drehzahl korrigiert werden müssen, da die Korrektur ausschließlich die Leckage, welche durch die ändernden Druckverhältnisse entsteht, kompensieren muß. Bei einer Rückschaltung vom zweiten in den ersten Fahrbereich verläuft das Schließen und Öffnen der Kupplungen entsprechend in anderer Richtung. Im zweiten Fahrbereich wird anschließend die zweite, stufenlos verstellbare Einheit vom Hubvolumen Null in Richtung maximales Hubvolumen und die erste, stufenlos verstellbare Einheit vom maximalen Hubvolumen in Richtung minimales Hubvolumen verstellt.

Weitere Merkmale sind der Figuren-Beschreibung zu entnehmen.

Es zeigen:
- Fig. 1: ein Leistungsverzweigungsgetriebe mit zwei Fahrbereichen für Vorwärtsfahrt und zwei Fahrbereichen für Rückwärts- fahrt und

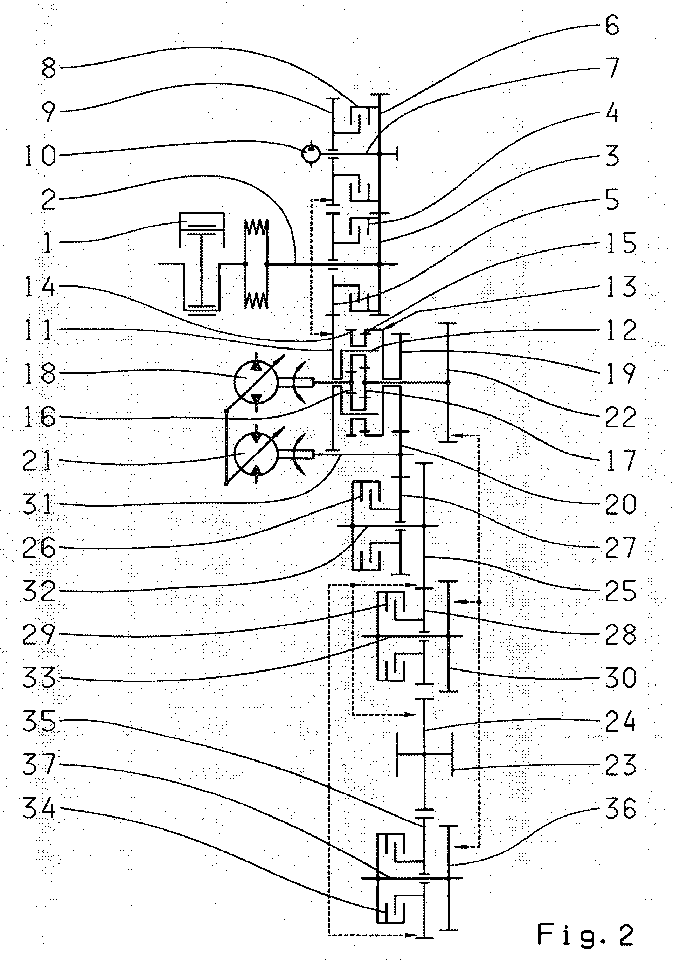

- Fig. 2: ein Leistungsverzweigungsgetriebe mit drei Fahrbereichen für Vorwärtsfahrt und drei Fahrbereichen für Rückwärts- fahrt.

### Fig. 1:

Ein Antriebsmotor 1 treibt die Antriebswelle 2 des Leistungsverzweigungsgetriebes an. Die Antriebswelle 2 ist drehfest mit einem als Festrad ausgebildeten Stirnrad 3 und einer Kupplung für Vorwärtsfahrt 4 verbunden. Auf der Antriebswelle 2 ist ein Losrad 5 angeordnet, welches drehfest mit der Kupplung für Vorwärtsfahrt 4 verbunden ist. Das Stirnrad 3 kämmt mit einem als Festrad ausgebildeten Stirnrad 6, welches drehfest mit der Welle 7 verbunden ist. Auf der Welle 7, drehfest mit dem Stirnrad 6 verbunden, ist die Kupplung für Rückwärtsfahrt 8 angeordnet. Auf der Welle 7 ist das Losrad 9 angeordnet, welches drehfest mit der Kupplung für Rückwärtsfahrt 8 verbunden ist. Ein Verbraucher 10, beispielsweise eine hydraulische Pumpe, ist von der Welle 7 angetrieben. Vorzugsweise sind die Übersetzungen so gewählt, dass die Welle 7, und somit der Verbraucher 10, eine höhere Drehzahl aufweist als die Welle 2. Das Losrad 5 und das Losrad 9 kämmen mit dem Losrad 11, welches drehfest mit dem Planetenträger 12 des Summierungsplanetengetriebes 13 verbunden ist. Der Planetenträger 12 lagert mindestens ein Doppelplanetenrad 14, wobei das Doppelplanetenrad einerseits mit dem Hohlrad 15 und andererseits mit dem ersten Sonnenrad 16 und dem zweiten Sonnenrad 17 kämmt. Das erste Sonnenrad 16 ist mit der ersten, stufenlos verstellbaren Einheit 18, beispielsweise einem Hydrostaten, verbunden. Das Hohlrad 15 ist mit dem Losrad 19 drehfest verbunden, welches mit dem als Festrad ausgebildeten Stirnrad 20 kämmt. Das Stirnrad 20 ist mit der zweiten, stufenlos verstellbaren Einheit 21, beispielsweise einem Hydrostaten, verbunden. Das zweite Sonnenrad 17 ist mit dem als Festrad ausgebildeten Stirnrad 22 drehfest verbunden. Der Abtrieb 23 des Leistungsverzweigungsgetriebes ist drehfest mit dem als Festrad ausgebildeten Stirnrad 24 verbunden, welches einerseits über das als Festrad ausgebildete Stirnrad 25 der Kupplung für den ersten Fahrbereich 26 und im Losrad 27 mit dem Stirnrad 20 verbindbar ist, oder andererseits über das Stirnrad 25 das Losrad 28 der Kupplung für den zweiten Fahrbereich 29 und das als Festrad ausgebildete Stirnrad 30 mit dem Stirnrad 22 verbindbar ist. Somit ist es möglich, durch Schließen der Kupplung für den ersten Fahrbereich 26 und Öffnen der Kupplung für den zweiten Fahrbereich 29 den Abtrieb 23 in einem ersten Fahrbereich zu betreiben und durch Öffnen der Kupplung 26 und Schließen der Kupplung 29 den Abtrieb 23 in einem zweiten Fahrbereich zu betreiben. Die Übersetzungen sind so ausgeführt, dass beim Erreichen des Endes des ersten Fahrbereichs bei geschlossener Kupplung 26 das Losrad 28 und das Stirnrad 30 synchron umlaufen, wodurch die Kupplung 29 ohne Differenzdrehzahl im Schließsinne betätigbar ist. Bauraumbedingt kann es auch notwendig sein, die Räderkette, bestehend aus dem Losrad 19, dem Stirnrad 20 und dem Losrad 27, in zwei Radpaare aufzuteilen, wodurch auf der Welle 31 zwei Stirnräder in Form von Festrädern angeordnet sind. Dadurch kann eine größere Übersetzung realisiert werden.

Dadurch, dass die Welle 2, die Welle 7, die Welle 31, 32 und 33 beabstandet zueinander angeordnet sind und auf diesen Wellen nur eine einzige Kupplung angeordnet ist, kann ein Leistungsverzweigungsgetriebe geschaffen werden, welches kompakt ausgeführt ist und einen großen Achsabstand aufweist.

### Fig. 2:

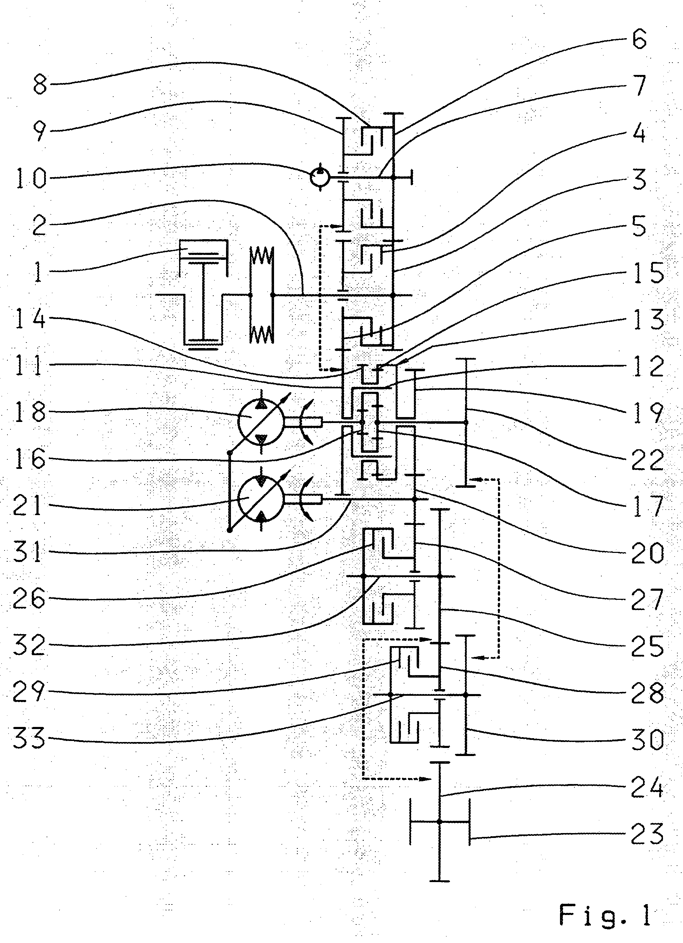

Diese unterscheidet sich von der Fig. 1 ausschließlich dadurch, dass ein dritter Fahrbereich zusätzlich vorhanden ist. Hierfür ist eine Kupplung für einen dritten Fahrbereich 34 vorhanden, welche das Losrad 35 mit dem als Festrad ausgebildeten Stirnrad 36 verbindet, um einen dritten Fahrbereich zu schalten, wobei das Stirnrad 36 mit dem Stirnrad 30 oder dem Stirnrad 22 kämmt, und das Losrad 35 mit dem Stirnrad 25 kämmt. Ein erster Fahrbereich wird durch Betätigen der Kupplung für den ersten Fahrbereich 26 im Schließsinne und Betätigen der Kupplung für den zweiten Fahrbereich 29 und der Kupplung für den dritten Fahrbereich 34 im Öffnungssinne geschaltet, ein zweiter Fahrbereich wird durch Betätigen der Kupplung 29 für den zweiten Fahrbereich im Schließsinne und der Kupplung 26 und der Kupplung 34 im Öffnungssinne geschaltet und ein dritter Fahrbereich wird durch Betätigen der Kupplung 34 im Schließsinne und Betätigen der Kupplung 26 und 29 geschaltet.

### Bezugszeichen

- 1: Antriebsmotor
- 2: Antriebswelle
- 3: Stirnrad
- 4: Kupplung für Vorwärtsfahrt
- 5: Losrad
- 6: Stirnrad
- 7: Welle
- 8: Kupplung für Rückwärtsfahrt
- 9: Losrad
- 10: Verbraucher
- 11: Losrad
- 12: Planetenträger
- 13: Summierungsplanetengetriebe
- 14: Doppelplanetenrad
- 15: Hohlrad
- 16: erstes Sonnenrad
- 17: zweites Sonnenrad
- 18: erste stufenlos verstellbare Einheit
- 19: Losrad
- 20: Stirnrad
- 21: zweite stufenlos verstellbare Einheit
- 22: Stirnrad
- 23: Abtrieb
- 24: Stirnrad
- 25: Stirnrad
- 26: Kupplung für den ersten Fahrbereich
- 27: Losrad
- 28: Losrad
- 29: Kupplung für den zweiten Fahrbereich
- 30: Stirnrad
- 31: Welle
- 32: Welle
- 33: Welle
- 34: Kupplung für den dritten Fahrbereich
- 35: Losrad
- 36: Stirnrad
- 37: Welle

## Patentansprüche

1. Leistungsverzweigungsgetriebe mit einem stufenlos verstellbaren Zweig und einem mechanischen Zweig, wobei die beiden Zweige in einem Summierungsgetriebe (13) summiert werden, wobei das Summierungsgetriebe (13) als Planetengetriebe ausgeführt ist, mit mindestens zwei Fahrbereichen, welche über Kupplungen (26, 29) schaltbar sind, und einer Kupplung für eine Vorwärtsfahrtrichtung (4) und einer Kupplung für eine Rückwärtsfahrtrichtung (8) und Wellen (32, 33), auf denen Zahnräder (27, 25, 28, 30) und Kupplungen (26, 29) angeordnet sind, wobei auf jeder Welle (2, 7; 32, 33) nur eine einzige Kupplung (4, 8; 26, 29) angeordnet ist und die Wellen (2, 7; 32, 33) beabstandet zueinander angeordnet sind, **dadurch gekennzeichnet, dass** der stufenlos verstellbare Leistungszweig zwei Schrägachsen-Hydraulikeinheiten aufweist, welche über ein gemeinsames Joch verstellbar sind.

## Claims

1. Power split transmission having a steplessly adjustable branch and having a mechanical branch, wherein the two branches are summed in a summing gearing (13), wherein the summing gearing (13) is designed as a planetary gear set, having at least two drive ranges which can be engaged by means of clutches (26, 29), and having one clutch for a forward travel direction (4) and one clutch for a reverse travel direction (8) and having shafts (32, 33) on which gearwheels (27, 25, 28, 30) and clutches (26, 29) are arranged, wherein only a single clutch (4, 8; 26, 29) is arranged on each shaft (2, 7; 32, 33) and the shafts (2, 7; 32, 33) are arranged spaced apart from one another, **characterized in that** the steplessly adjustable power branch has two swashplate-type hydraulic units which can be adjusted by means of a common yoke.

## Revendications

1. Transmission à répartition de puissance comprenant une branche à variation continue et une branche mécanique, les deux branches étant additionnées dans un engrenage combineur (13), l'engrenage combineur (13) étant réalisé sous forme de transmission planétaire, avec au moins deux plages de conduite, qui peuvent être commutées par le biais d'embrayages (26, 29) et un embrayage pour une direction de conduite en marche avant (4) et un embrayage pour une direction de conduite en marche arrière (8) et des arbres (32, 33) sur lesquels sont disposées des roues dentées (27, 25, 28, 30) et des embrayages (26, 29), seulement un embrayage unique (4, 8 ; 26, 29) étant disposé sur chaque arbre (2, 7 ; 32, 33) et les arbres (2, 7 ; 32, 33) étant disposés à distance les uns des autres, **caractérisée en ce que** la branche de puissance à variation continue présente deux unités hydrauliques à axes obliques, qui peuvent être réglées par le biais d'un joug commun.
